# EUROPÄISCHE PATENTSCHRIFT

(11) **EP 3 665 032 B1**
(45) Veröffentlichungstag und Bekanntmachung des Hinweises auf die Patenterteilung: **30.10.2024**
(21) Anmeldenummer: 18737207.3
(22) Anmeldetag: 28.06.2018
(51) Int. Cl.: B60L 5/00, B60L 5/32, H01R 41/00, F15B 11/028

(54) **VORRICHTUNG ZUR STEUERUNG EINER ANPRESSKRAFT EINES STROMABNEHMERS MIT EINEM RELAISVENTIL**
DEVICE FOR CONTROLLING A PRESSING FORCE OF A CURRENT COLLECTOR HAVING A RELAY VALVE
DISPOSITIF DE COMMANDE D'UNE FORCE DE CONTACT D'UN COLLECTEUR DE COURANT AVEC UNE VANNE RELAIS

(30) Priorität: 11.08.2017 DE 102017214115
(43) Veröffentlichungstag der Anmeldung: 17.06.2020
(73) Patentinhaber: KNORR-BREMSE Systeme für Schienenfahrzeuge GmbH, 80809 München (DE)
(72) Erfinder: VOHLA, Manfred, 1130 Wien (AT); HASELSTEINER, Kurt, 2340 Möding (AT)
(86) Internationale Anmeldenummer: PCT/EP2018/067499
(87) Internationale Veröffentlichungsnummer: WO 2019/029902

(56) Entgegenhaltungen:
- EP-A1- 1 539 528
- EP-A1- 1 862 347
- EP-B1- 1 539 528
- DE-A1- 10 126 042
- DE-A1- 102004 055 030

## Beschreibung

Die Erfindung betrifft eine Vorrichtung zur Steuerung einer Anpresskraft eines Stromabnehmers eines Fahrzeugs (beispielsweise eines Triebfahrzeugs) an eine Fahrleitung mit einem Relaisventil, ein Verfahren zum Ausführen einer derartigen Vorrichtung sowie einen Fahrzeug mit mindestens einer derartigen Vorrichtung.

Stromabnehmer elektrischer Triebfahrzeuge benötigen eine definierte Anpresskraft an die Fahrleitung. Die Fahrleitung ist im gegenständlichen Fall eine Oberleitung konventioneller Ausführung oder innovativer Ausführung wie z.B. Deckenstromschienen.

Ist diese Anpresskraft zu klein, fängt der Stromabnehmer zu springen an. Die daraus resultierenden Kontaktunterbrechungen und Lichtbögen beeinträchtigen die Lebensdauer von Stromabnehmer-Schleifleisten und Fahrleitungen. Ist diese Anpresskraft zu groß, wird die Fahrleitung übermäßig angehoben. Bei unzulässigen Krafteinleitungen in die Fahrleitung kann deren mechanische Positionierung nicht sichergestellt werden, ein "Einfädeln" des Stromabnehmers und Herunterreißen der Fahrleitung sind typische Konsequenzen.

Die notwendigen Anpresskräfte sind insbesondere bei Hochgeschwindigkeitsbetrieb (>200km/h) stark ansteigend bis etwa zum Doppelten des Stillstandwertes. Um diesen Anstieg zu gewährleisten, werden nach Stand der Technik Windleitbleche im Stromabnehmer verwendet, die einerseits aerodynamisch eine Zusatzkraft aufbringen und andererseits dynamische Auftriebskräfte kompensieren. Nachteilig ist hierbei, dass die Auslegung und Handhabung dieser Windleitbleche nicht einfach an unterschiedliche Betriebssituationen anpassbar ist. Beispielsweise ist die aerodynamische Zusatzkraft in Hochgeschwindigkeitstunneln signifikant höher als auf freier Strecke. Diese Zusatzkraft ist jedoch auch von Fahrzeugform, Tunnelquerschnitt, Versperrungsmaß (Verhältnis Fahrzeugquerschnitt zu Tunnelquerschnitt), Querschnittssprüngen und Position des Stromabnehmers im Zugverband abhängig. Auch ist diese Zusatzkraft fahrtrichtungsabhängig (beispielweise je nach Spieß- oder Kniegang eines asymmetrischen Einholm-Stromabnehmers).

Zusätzlich bestehen zunehmend Anforderungen, die Stromabnehmer-Anpresskraft im Stillstand anzuheben, um Überhitzung und Beschädigung von Schleifleiste und Fahrleitungsdraht im Kontaktpunkt bei hohem Stromfluss durch Beleuchtung, Klimaanlagen und Fahrgastinformationssysteme bei bereitgestellten Fahrzeugen zu vermeiden. Windleitbleche können jedoch keine Zusatzkraft aufbringen, wenn sich das Triebfahrzeug im Stillstand befindet.

Aus dem Stand der Technik sind heute einstufige und zweistufige (festeingestellte, aber justierbare) Drücke bekannt, die den Stromabnehmer durch einen volumenvariablen Hebebalg an die Fahrleitung drücken. In einzelnen Fällen werden bereits elektronpneumatisch (ep) geregelte Druckansteuerungen verwendet, wie sie 2.8. aus EP1 539 528 A1 bekannt sind. Darin wird gezeigt, wie die von Bahnbetreibern geforderte Rückfallebene bei Störung des ep-Reglers über ein Umschaltventil erfolgt. Ein ep-Regler wird im Störungsfall auf ein festeingestelltes justierbares Druckminderventil umgeschaltet. Der ep-Regler steuert die Anpresskraft im Regelbetrieb des Triebfahrzeuges. Nachteilig ist hierbei, dass die Anpresskraft über den Regler nicht genau genug angesteuert werden kann und hoher Luftverbrauch verursacht wird.

Aus der DE 101 26 042 A1 ist eine pneumatische Steuerung eines Stromabnehmers mit einem Drucksteuermittel zur Regelung des Anpressdrucks bekannt, wobei ein Vorsteuersignal dem Drucksteuermittel als Sollwertsignal zugeführt wird und somit die Anpresskraft des Stromabnehmers an einer elektrischen Leitung den Begebenheiten der jeweiligen Fahrsituation angepasst werden kann,

Der Erfindung liegt daher die Aufgabe zu Grunde, eine Vorrichtung zu schaffen, die eine genauere Ansteuerung der benötigten Anpresskräfte zwischen einem Stromabnehmer und einer Fahrleitung durchführt, die besser zu verschiedenen Betriebssituationen passen.

Diese Aufgabe wird erfindungsgemäß mit einer Vorrichtung zur Steuerung oder Regelung einer Anpresskraft zwischen einer Fahrleitung und einem Stromabnehmer eines Fahrzeugs nach Anspruch 1 gelöst. Weiterhin wird die Aufgabe mit einem Verfahren nach Anspruch 9 unter Verwendung einer erfindungsgemäßen Vorrichtung gelöst. Vorteilhafte Ausgestaltungen der Erfindung sind in den Unteransprüchen enthalten.

Erfindungsgemäß besteht die Lösung der Aufgabe in einer Vorrichtung zum Steuern einer Anpresskraft zwischen einer Fahrleitung und einem Stromabnehmer eines Fahrzeugs, die pneumatisch oder hydraulisch betätigt wird. Dabei kann z.B. Luft oder Öl als Druckmedien verwendet werden. Während des Hebens oder Senkens des Stromabnehmers befindet sich der Mediendruck im Gleichgewicht mit der Schwerkraft (Gewicht) des Stromabnehmers. Die benötigte Anpresskraft erfolgt durch eine Druckerhöhung eines Arbeitsdrucks, die durch Steuerung oder Regelung eines Leistungsdrucks mittels zwei Vorsteuerdrücken aus einem Vorsteuerkreis ermöglicht ist. Wenn die Betriebssituation eine zusätzliche Anpresskraft erfordert, wird der Vorsteuerdruck im Vorsteuerkreis eingestellt, um den Leistungsdruck zu steuern und den Arbeitsdruck zu erhöhen. Die Vorrichtung weist ein Relaisventil auf, welches mindestens zwei Eingänge für die Vorsteuerdrücke mit einem Kleinquerschnitt und einen Eingang für den Leistungsdruck und einen Ausgang für den Arbeitsdruck mit Großquerschnitten aufweist, so dass ein Übersetzungsverhältnis vorgesehen ist. Dabei findet eine Addition von mehreren Vorsteuerdrücken bei den Eingängen des Relaisventils statt, um einen Leistungsdruck zu steuern.

Vorzugsweise weist der Vorsteuerkreis einen Basissteuerkreis einschließlich einer Basissteuervorrichtung (z.B. eines Druckminderventils) zur Einstellung eines ersten Vorsteuerdrucks (eines Basis-Vorsteuerdrucks), einen Zusatzsteuerkreis einschließlich einer Zusatzsteuervorrichtung (z.B. eines Reglers) zur Einstellung eines zweiten Vorsteuerdrucks und eine Einstellvorrichtung einschließlich eines Relaisventils zum Steuern des Leistungsdrucks und zur Bereitstellung des Arbeitsdrucks auf. Nach der Einstellvorrichtung wird der Arbeitsdruck auf den Stromabnehmer geleitet, wobei weitere Elemente zur Beeinflussung von Druck oder Volumenstrom zwischengeschaltet werden können. Ein Arbeitsdrucksteuerkreis ist vorgesehen, der bestimmt, ob der Arbeitsdruck schnell oder langsam zu dem Stromabnehmer geleitet werden soll. Zusätzlich kann der Arbeitsdrucksteuerkreis so konfiguriert sein, dass der Arbeitsdruck auf einen maximalen Wert begrenzt wird, um einen zu hohen Druck auf den Stromabnehmer bzw. die Fahrleitung zu vermeiden, um eine Beschädigung zu verhindern.

Das Relaisventil ist derart ausgelegt, dass zwei Eingänge für zwei Vorsteuerdrücke mit jeweils einem Kleinquerschnitt vorgesehen ist/sind und ein Eingang für den Leistungsdruck und ein Ausgang für den Arbeitsdruck mit Großquerschnitten vorgesehen sind, damit eine hochdynamische Vorsteuerdruckregelung üblicherweise 1:1 auf den volumenstarken Arbeitsdruck übersetzt werden kann. Zusätzlich kann in einer Ausführungsvariante ein Übersetzungsverhältnis anderes als 1:1 realisiert werden. Zum Beispiel, wenn das Übersetzungsverhältnis 1:5 gewählt ist, wirken sich 10 bar im Vorsteuerkreis mit einem Ausgangsdruck von 2 bar am Ausgang des Relaisventils aus. Eine Abweichung ist in diesem Fall auch proportional reduziert. Wenn zum Beispiel die Abweichung im Vorsteuerkreis ± 0,1 bar beträgt, beträgt die Abweichung im Ausgang des Relaisventils nur ± 0,02 bar, was einer absoluten Reduzierung der Abweichung entspricht, und somit eine Erhöhung der Steuergenauigkeit und eine Verringerung der Hysterese ermöglicht.

Vorzugsweise weist der Vorsteuerkreis neben dem Regler noch einen Drucksensor und zwei Regelventile auf. Der Drucksensor ist vorgesehen, um dem Regler des Vorsteuerkreises Drucksignale zur Verfügung zu stellen. Durch das kleine Steuervolumen des Vorsteuerkreises kann die höhere Dynamik dazu beitragen, eine höhere Steuergenauigkeit zu erlangen. Durch eine große Auflösung des Drucksensors ist ein tiefes Regelniveau (kleine Drücke) des Reglers des Zusatzsteuerkreises möglich und dadurch kann eine kleinere Toleranz (höhere Regelgenauigkeit) bei gleichzeitig kleinerer Hysterese realisiert werden.

Dem Vorsteuerkreis steht stets ein konstantes Steuervolumen zur Verfügung, da das variable Arbeitsvolumen vom Relaisventil abgetrennt wird. Der Regler des Vorsteuerkreises kann präziser den Druck einstellen als ein direkter Regler des Arbeitsdrucks mit variablen Volumen.

In einer vorteilhaften Ausgestaltung der Erfindung ist zur Überwachung des Reglers u.a. ein Zustandsautomat vorgesehen, um den Arbeitsdruck zu überwachen, ob er eine Mindestdruckvorgabe unterschreitet, eine Höchstdruckvorgabe überschreitet, oder von einer Bandbreite zwischen Soll- und Ist-Wert abweicht. Wenn einer dieser Fälle auftritt, findet eine Schnellabschaltung statt. Die Schnellabschaltung Wirkt auf den Vorsteuerkreis. Je nach Aufbau des zweiten Vorsteuerdrucks als additive Regelung zu einem Basis-Vorsteuerdruck oder als absolute Vorsteuerdruckregelung kann ein gewisser Schnellabschaltarbeitsdruck eingestellt werden. Zusätzlich kann die Schnellabschaltung auch auf den Leistungsdruck wirken und derart die Versorgung des Relaisventils unterbinden, wodurch der Arbeitsdruck in jedem Fall abgelassen wird. Dies kann über ein Hauptbestätigungsventil oder durch ein nahe am Stromabnehmer platziertes Kolbenventil oder Notbremsventil mit internem Druckvergleich und Referenzdruckvolumen erfolgen. Anstelle eines Zustandsautomaten ist beispielweise eine Elektro-, Elektronik- oder Mikroprozessoreinheit (gegebenenfalls mit einer gemäß einem Sicherheitslevel eingestuften Software) zum Überwachen des Arbeitsdrucks möglich. Vergleichssignale für diese Überwachungseinrichtung können aus dem Drucksensor des Zusatzsteuerkreises und / oder einem für den Arbeitsdruck vorgesehenen Drucksensor gewonnen werden.

Noch ein Vorteil der Erfindung besteht darin, dass die Vorrichtung derart ausgeführt wird, dass bei unveränderter Anpresskraft kein Verbrauch von Druckmedien stattfindet, wodurch ein ständiger Medienverbrauch vermieden wird, der eine hohe Anzahl von Kompressor-Laufzyklen des Fahrzeugs verursacht, die zu signifikanter Energieverschwendung, Lärmentwicklung und Verschleiß am Kompressor führen. Die daraus resultierende Energie-Effizienz stellt die Energieversorgung des Fahrzeugs sicher, besonders wenn erhebliche Energiemengen für Beleuchtung und Klimatisierung via Stromabnehmer zu dem Fahrzeug benötigt werden.

Im Folgenden werden vier Ausführungsbeispiele der Erfindung anhand der Figuren näher erläutert.

Es zeigen:
Fig. 1 eine schematische Darstellung einer Steuervorrichtung eines Stromabnehmers gemäß der Erfindung;
Fig. 2 eine schematische Darstellung eines Vorsteuerkreises der Steuervorrichtung eines Stromabnehmers gemäß einem ersten Ausführungsbeispiel der Erfindung;

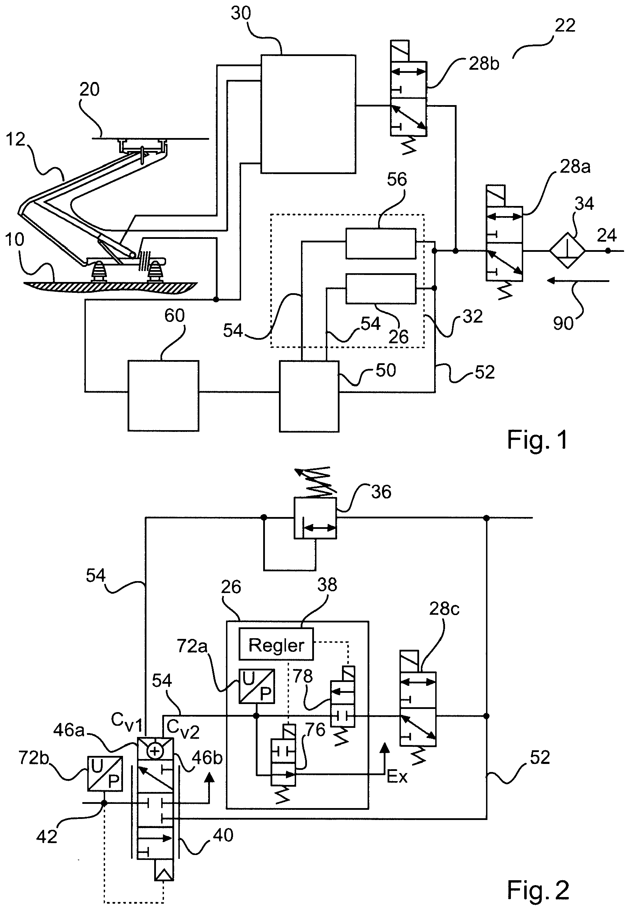

Fig. 1 zeigt einen Teil eines Fahrzeugs 10, einen Stromabnehmer 12, eine Fahrleitung 20 und eine Steuervorrichtung 22 des Stromabnehmers 12. Das Druckmedium Luft strömt in Einströmungsrichtung 90 von einem Druckeingang 24 über einen Luftfilter 34 in die Steuervorrichtung 22 ein.

Wenn sich das Fahrzeug 10 im Betrieb oder Stand-by-Modus befindet, ist die Steuervorrichtung 22 über ein Umschaltventil 28a eingeschaltet. Ein Umschaltventil 28b und eine Einrichtung 30 stellen Überwachungseinrichtungen dar.

Während des Betriebs des Fahrzeugs 10 wird eine bestimmte Anpresskraft zwischen dem Stromabnehmer 12 und der Fahrleitung 20 benötigt, um einen sicheren Übergang der Energie von der Fahrleitung 20 über den Stromabnehmer 12 zu dem Fahrzeug 10 zu gewährleisten. Dieser Arbeitsdruck wird durch einen Vorsteuerkreis 32 mit einer Einstellvorrichtung 50 erzielt und danach von einem Arbeitsdruckregelkreis 60 gesteuert.

Der Vorsteuerkreis 32 weist einen Basissteuerkreis 56, einen Zusatzsteuerkreis 26 sowie einen Einstellvorrichtung 50 auf. Ein Leistungsdruck wird einer ersten Druckmedienleitung 52, dem Basissteuerkreis 56, und dem Zusatzsteuerkreis 26 zugeführt. Der Basissteuerkreis 56 stellt einen ersten Vorsteuerdruck (Basis-Vorsteuerdruck) ein und der Zusatzsteuerkreis 26 stellt einen zweiten Vorsteuerdruck ein, wobei der erste Vorsteuerdruck und der zweite Vorsteuerdruck über je eine zweite Druckmedienleitung 54 weiter zu der Einstellvorrichtung 50 geführt werden, um den Leistungsruck von der ersten Druckmedienleitung 52 darin zu steuern.

Fig. 2 zeigt einen Vorsteuerkreis 32 der Steuervorrichtung 22 gemäß eines ersten Ausführungsbeispiels der Erfindung. Der Vorsteuerkreis 32 weist ein Druckminderventil 36, ein Umschaltventil 280, einen Zusatzsteuerkreis 26 einschließlich eines Reglers 38, eines Drucksensors 72a, eines ersten Regelventiles 76 zum Druckabbau, eines zweiten Regelventiles 78 zum Druckaufbau, ein Relaisventil 40 und einen Drucksensor 72b auf.

Das Druckminderventil 36 ist zur Einstellung des ersten Vorsteuerdrucks (Basis-Vorsteuerdrucks) ausgelegt, und der Regler 38 ist zur Einstellung des zweiten Vorsteuerdrucks (Zusatz-Vorsteuerdrucks) ausgelegt, wobei der Basis-Vorsteuerdruck und der Zusatz-Vorsteuerdruck jeweils über die zweite Druckmedienleitung 54 zu Eingängen 46a und 46b des Relaisventils 40 geführt sind. Das Relaisventil 40 ist so ausgelegt, dass eine Addition der Vorsteuerdrücke nach den Eingängen 46a und 46b stattfindet, um den Leistungsdruck von der ersten Druckmedienleitung 52 mit dem addierten Vorsteuerdruck zu steuern und den Arbeitsdruck von einem Ausgang 42 des Relaisventils 40 auszulassen. Das Umschaltventil 28c ist vorgesehen, um den Zusatzsteuerkreis im Notfall auszuschalten. Die Drucksensoren 723 und 72b sind vorgesehen, um den Zusatz-Vorsteuerdruck im Zusatzsteuerkreis 26 und den Arbeitsdruck am Ausgang 42 des Relaisventils zu messen.

## Patentansprüche

1. Vorrichtung (22) zur Steuerung einer Anpresskraft eines Stromabnehmers (12) eines Fahrzeugs (10) an eine Fahrleitung (20), wobei die Anpresskraft mittels eines pneumatischen oder hydraulischen Arbeitsdrucks betätigt wird, wobei die Vorrichtung (22) aufweist:
- einen Vorsteuerkreis (32) und einen Arbeitsdrucksteuerkreis (60);
- ein Relaisventil (40), das dazu konfiguriert ist, einen zur Verfügung gestellten Leistungsdruck in Abhängigkeit von zwei Vorsteuerdrücken zu steuern und als Arbeitsdruck in den Arbeitsdrucksteuerkreis (60) abzugeben,
wobei das Relaisventil (40) mindestens zwei Eingänge (46, 46a, 46b) für die Vorsteuerdrücke mit einem Kleinquerschnitt aufweist, und einen Eingang für den Leistungsdruck und einen Ausgang (42) für den Arbeitsdruck mit Großquerschnitten aufweist, so dass ein Übersetzungsverhältnis vorgesehen ist, wobei mindestens zwei Eingänge (46a, 46b) auf der Vorsteuerdruckseite auf dem Relaisventil (40) vorgesehen sind und **dadurch gekennzeichnet, dass** das Relaisventil derart konfiguriert ist, dass eine Addition von mehreren Vorsteuerdrücken bei den Eingängen stattfindet, um den Leistungsdruck zu steuern.

2. Vorrichtung (22) nach dem vorangegangenen Anspruch, wobei das Übersetzungsverhältnis des Relaisventils mit einem anderen Übersetzungsverhältnis als 1:1 vorgesehen ist, wobei das Übersetzungsverhältnis verstärkend oder mindernd gewählt ist.

3. Vorrichtung (22) nach einem der vorangegangenen Ansprüche, **dadurch gekennzeichnet, dass** eine Basissteuervorrichtung eines Basissteuerkreises (56) durch ein Druckminderventil (36) zur Einstellung eines ersten Vorsteuerdrucks gebildet ist.

4. Vorrichtung (22) nach einem der vorangegangenen Ansprüche, **dadurch gekennzeichnet, dass** eine Zusatzsteuervorrichtung eines Zusatzsteuerkreises (26) durch einen Regler (38) zur Einstellung eines zweiten Vorsteuerdrucks gebildet ist.

5. Vorrichtung (22) nach einem der vorangegangenen Ansprüche, **dadurch gekennzeichnet, dass** im Leistungsdruckkreis vor einer Einleitstelle des Leistungsdrucks in den Vorsteuerkreis (32) und den Arbeitsdrucksteuerkreis (60) ein Umschaltventil (28a) als Ein- und Ausschaltventil vorgesehen ist.

6. Vorrichtung (22) nach einem der vorangegangenen Ansprüche, **dadurch gekennzeichnet, dass** ein Zustandsautomat zum Überwachen des Arbeitsdrucks vorgesehen ist, der derart konfiguriert ist, dass er eine Abschaltung der Vorsteuerdrücke, vorzugsweise der geregelten Vorsteuerdrücke, in festzulegenden Situationen vornimmt.

7. Vorrichtung (22) nach einem der Ansprüche 1 bis 5, **dadurch gekennzeichnet, dass** eine Elektro-, Elektronik- oder Mikroprozessoreinheit zum Überwachen des Arbeitsdrucks vorgesehen ist, die derart konfiguriert ist, dass sie eine Abschaltung der Vorsteuerdrücke vorzugsweise der geregelten Vorsteuerdrücke, in festzulegenden Situationen vornimmt.

8. Vorrichtung (22) nach einem der vorangegangenen Ansprüche, **dadurch gekennzeichnet, dass** der Zusatzsteuerkreis (26) einen Regler (38), einen Drucksensor (72a) und zwei Regelventile (76, 78) aufweist, mit denen der ersten Vorsteuerdruck in beiden Richtungen kalibriert werden kann.

9. Verfahren zum Steuern einer Anpresskraft eines Stromabnehmers (12) eines Fahrzeugs (10) an eine Fahrleitung (20), wobei die Anpresskraft mittels eines pneumatischen oder hydraulischen Leistungsdrucks betätigt wird, wobei der Leistungsdruck durch Vorsteuerdrücke von einem Vorsteuerkreis geregelt wird, mit den folgenden Schritten:
- Einstellen eines ersten Vorsteuerdrucks im Vorsteuerkreis zur Einstellung der normalen Anpresskraft,
- Einstellen eines zweiten Vorsteuerdrucks im Vorsteuerkreis zur Einstellung einer Zusatz-Anpresskraft und
- Einstellen des Leistungsdrucks mittels der Vorsteuerdrücke und des Übersetzungsverhältnisses, **gekennzeichnet durch**
- ein Addieren der Vorsteuerdrücke in Abhängigkeit von der jeweiligen Fahrsituation.

10. Fahrzeug (10) mit mindestens einer Vorrichtung (22) gemäß einem der Ansprüche 1 bis 8.

## Claims

1. Device (22) for controlling a pressing force which is from a current collector (12) of a vehicle (10) and acts on an overhead line (20), wherein the pressing force is actuated by a pneumatic or hydraulic working pressure, wherein the device (22) has:
- a pilot control circuit (32) and a working pressure control circuit (60);
- a relay valve (40) configured to control, in accordance with two pilot control pressures, a power pressure which has been made available and to output said power pressure as a working pressure into the working pressure control circuit (60),
wherein the relay valve (40) has at least two inputs (46, 46a, 46b) for the pilot control pressures with a small cross-section, and has one input for the power pressure and one output (42) for the working pressure with large cross-sections, so that a transmission ratio is provided, wherein at least two inputs (46a, 46b) are provided on the pilot control pressure side on the relay valve (40) and
**characterised in that** the relay valve is configured such that a plurality of pilot control pressures are added at the inputs to control the power pressure.

2. Device (22) according to the preceding claim, wherein the transmission ratio of the relay valve is provided with a transmission ratio other than 1:1, wherein the transmission ratio selected is a step-up or step-down transmission ratio.

3. Device (22) according to any one of the preceding claims, **characterised in that** a base control device of a base control circuit (56) is formed by a pressure reducing valve (36) for setting a first pilot control pressure.

4. Device (22) according to any one of the preceding claims, **characterised in that** an additional control device of an additional control circuit (26) is formed by a regulator (38) for setting a second pilot control pressure.

5. Device (22) according to any one of the preceding claims, **characterised in that** a switching valve (28a) is provided as a switch-on and switch-off valve in the power pressure circuit upstream of an introduction point for the power pressure into the pilot control circuit (32) and the working pressure control circuit (60).

6. Device (22) according to any one of the preceding claims, **characterised in that** an automatic state machine is provided for monitoring the working pressure, which machine is configured such that it switches off the pilot control pressures, preferably the regulated pilot control pressures, in situations that are to be defined.

7. Device (22) according to any one of claims 1 to 5, **characterised in that** an electrical, electronic or microprocessor unit is provided for monitoring the working pressure, which unit is configured to switch off the pilot control pressures, preferably the regulated pilot control pressures, in situations that are to be defined.

8. Device (22) according to any one of the preceding claims, **characterised in that** the additional control circuit (26) has a regulator (38), a pressure sensor (72a) and two regulating valves (76, 78) with which the first pilot control pressure can be calibrated in both directions.

9. Method for controlling a pressing force which is from a current collector (12) of a vehicle (10) and acts on an overhead line (20), wherein the pressing force is actuated by a pneumatic or hydraulic working pressure, wherein the power pressure is regulated by pilot control pressures from a pilot control circuit, having the following steps:
- setting a first pilot control pressure in the pilot control circuit to set the normal pressing force,
- setting a second pilot control pressure in the pilot control circuit to set an additional pressing force, and
- setting the power pressure by means of the pilot control pressures and the transmission ratio, **characterised by**
- adding the pilot control pressures depending on the respective driving situation.

10. Vehicle (10) having at least one device (22) according to any one of claims 1 to 8.

## Revendications

1. Dispositif (22) de commande d'une force de contact d'un collecteur de courant (12) d'un véhicule (10) sur une ligne aérienne (20), dans lequel la force de contact est actionnée au moyen d'une pression de travail pneumatique ou hydraulique, dans lequel le dispositif (22) présente :
- un circuit de commande de pilotage (32) et un circuit de commande de pression de travail (60) ;
- une vanne relais (40) qui est configurée pour commander une pression de puissance mise à disposition en fonction de deux pressions de commande de pilotage et la délivrer en tant que pression de travail dans le circuit de commande de pression de travail (60),
dans lequel la vanne relais (40) présente au moins deux entrées (46, 46a, 46b) pour les pressions de commande de pilotage avec une petite section transversale, et présente une entrée pour la pression de puissance et une sortie (42) pour la pression de travail avec de grandes sections transversales, de sorte qu'un rapport de transmission soit prévu, dans lequel au moins deux entrées (46a, 46b) sont prévues sur la vanne relais (40) côté pressions de commande de pilotage, et
**caractérisé en ce que** la vanne relais est configurée de sorte qu'une addition de plusieurs pressions de commande de pilotage ait lieu au niveau des entrées pour commander la pression de puissance.

2. Dispositif (22) selon la revendication précédente, dans lequel le rapport de transmission de la vanne relais est prévu avec un rapport de transmission autre que 1:1, dans lequel le rapport de transmission est sélectionné de manière à augmenter ou à diminuer.

3. Dispositif (22) selon l'une quelconque des revendications précédentes, **caractérisé en ce qu'**un dispositif de commande de base d'un circuit de commande de base (56) est formé par une vanne de réduction de pression (36) pour régler une première pression de commande de pilotage.

4. Dispositif (22) selon l'une quelconque des revendications précédentes, **caractérisé en ce qu'**un dispositif de commande auxiliaire d'un circuit de commande supplémentaire (26) est formé par un régulateur (38) pour régler une seconde pression de commande de pilotage.

5. Dispositif (22) selon l'une quelconque des revendications précédentes, **caractérisé en ce qu'**une vanne de commutation (28a) est prévue en tant que vanne d'activation et de désactivation dans le circuit de pression de puissance, en amont d'un point d'introduction de la pression de puissance dans le circuit de commande de pilotage (32) et dans le circuit de commande de pression de travail (60).

6. Dispositif (22) selon l'une quelconque des revendications précédentes, **caractérisé en ce qu'**un automate d'état est prévu pour surveiller la pression de travail, qui est configuré de sorte qu'il effectue une coupure des pressions de commande de pilotage, de préférence des pressions de commande de pilotage régulées, dans des situations à définir.

7. Dispositif (22) selon l'une quelconque des revendications 1 à 5, **caractérisé en ce qu'**une unité électrique, électronique ou à microprocesseur est prévue pour surveiller la pression de travail, qui est configurée de sorte qu'elle effectue une coupure des pressions de commande de pilotage, de préférence des pressions de pilotages régulées, dans des situations à définir.

8. Dispositif (22) selon l'une quelconque des revendications précédentes, **caractérisé en ce que** le circuit de commande supplémentaire (26) présente un régulateur (38), un capteur de pression (72a) et deux vannes de régulation (76, 78) avec lesquelles la première pression de commande de pilotage peut être calibrée dans les deux directions.

9. Procédé de commande d'une force de contact d'un collecteur de courant (12) d'un véhicule (10) sur une ligne aérienne (20), dans lequel la force de contact est actionnée au moyen d'une pression de puissance pneumatique ou hydraulique, dans lequel la pression de puissance est régulée par des pressions de commande de pilotage d'un circuit de commande pilotage, avec les étapes suivantes :
- réglage d'une première pression de commande de pilotage dans le circuit de commande de pilotage pour régler la force de contact normale,
- réglage d'une seconde pression de commande de pilotage dans le circuit de commande de pilotage pour régler une force de contact supplémentaire, et
- réglage de la pression de puissance au moyen des pressions de commande de pilotage et du rapport de transmission, **caractérisé par**
- une addition des pressions de commande de pilotage en fonction de la situation de conduite respective.

10. Véhicule (10) avec au moins un dispositif (22) selon l'une quelconque des revendications 1 à 8.
